(19) Europäisches Patentamt

European Patent Office

Office européen des brevets

(11) **EP 0 622 185 B1**

(12) **EUROPÄISCHE PATENTSCHRIFT**

(45) Veröffentlichungstag und Bekanntmachung des Hinweises auf die Patenterteilung:
**28.07.1999 Patentblatt 1999/30**

(51) Int. Cl.⁶: **B32B 27/32**, C08L 23/06, C08L 23/10

(21) Anmeldenummer: **94105960.2**

(22) Anmeldetag: **18.04.1994**

(54) **Matte, biaxial orientierte Polypropylen-Mehrschichtfolie, Verfahren zu ihrer Herstellung und ihre Verwendung**

Matt biaxially oriented polypropylene multilayered film, process for its manufacture and its use

Film en polypropylène multicouche, mat, orienté biaxiallement, procédé pour sa fabrication et son utilisation

(84) Benannte Vertragsstaaten:
**BE DE ES FR GB IT NL**

(30) Priorität: **27.04.1993 DE 4313430**

(43) Veröffentlichungstag der Anmeldung:
**02.11.1994 Patentblatt 1994/44**

(73) Patentinhaber:
**Hoechst Trespaphan GmbH
66539 Neunkirchen (DE)**

(72) Erfinder:
• **Peiffer, Herbert, Dr.
D-55126 Mainz (DE)**
• **Murschall, Ursula, Dr.
D-55283 Nierstein (DE)**
• **Schlögl, Gunter, Dr.
D-65779 Kelkheim (DE)**

(74) Vertreter:
**Luderschmidt, Schüler & Partner GbR
Patentanwälte,
Postfach 3929
65029 Wiesbaden (DE)**

(56) Entgegenhaltungen:
**EP-A- 0 079 520          EP-A- 0 367 613
EP-A- 0 479 101          EP-A- 0 538 747
EP-A- 0 563 796          EP-A- 0 619 183
DE-A- 3 535 472**

• **PATENT ABSTRACTS OF JAPAN vol. 016, no. 306 (M-1276)6. Juli 1992 & JP-A-04 086 260 (TOYO SEIKAN K LTD) 18. März 1992**
• **DATABASE WPI Week 9141, Derwent Publications Ltd., London, GB; AN 91-298804 & JP-A-3 197 541 (IDEMITSU PETROCHEM KK) 28. August 1991**

**Beschreibung**

Die Erfindung betrifft eine Polypropylen-Mehrschichtfolie, welche mindestens eine Basisschicht, enthaltend Polypropylen, oder eine Polypropylenmischung, und niedermolekulares Harz, und mindestens eine Deckschicht umfaßt, welche eine Mischung bzw. ein Blend zweier Komponenten I und II enthält.

Die Komponente I der Mischung bzw. des Blends ist ein Propylenhomopolymeres oder ein Copolymeres aus -Olefinen mit 2 bis 10 Kohlenstoffatomen oder ein Terpolymeres aus -Olefinen mit 2 bis 10 Kohlenstoffatomen oder eine Mischung aus zwei oder mehreren der genannten Homo-, Co- und Terpolymeren oder ein Blend aus zwei oder mehreren der genannten Homo-, Co- und Terpolymeren.

Die Komponente II der Mischung bzw. des Blends ist ein High Density Polyethylen (HDPE) oder ein Blend aus HDPE und einem oder mehreren weiteren Polymeren, ausgewählt aus der Gruppe Propylenhomopolymer, Copolymer aus -Olefinen mit 2 bis 10 Kohlenstoffatomen, Terpolymer aus -Olefinen mit 2 bis 10 Kohlenstoffatomen, und ein Blend aus Co- und Terpolymeren aus -Olefinen mit 2 bis 10 Kohlenstoffatomen.

Die erfindungsgemäße Folie zeichnet sich durch eine charakteristische matte Oberfläche bzw. Optik und ein gutes Twistverhalten aus.

Die Erfindung betrifft ferner ein Verfahren zur Herstellung der Mehrschichtfolie sowie ihre Verwendung.

Eine besondere Art des Verschlusses von Volleinschlägen zum Zwecke der Verpackung von Verpackungsgütern ist das Drehen oder Wrappen. Bekannt ist dieses Verfahren der Verpackung insbesondere beim Volleinschlag kleinerer Verpackungsgüter, wobei insbesondere bevorzugt runde oder annähernd runde Gegenstände wie Bonbons, Flaschen, Kerzen, Dropsrollen, Schokoladen- und Marzipanriegel, Ostereier oder ähnliches häufig auf diese Art verpackt werden.

Voraussetzung für die Anwendung des Drehens ist die Eignung der Folie, die an den Drehstellen nicht ein- oder abreißen darf, andererseits aber so steif sein muß, daß beim Drehvorgang kein Schrumpfen oder Krumpeln auftritt. Nach dem Stand der Technik wird für Bonbondreheinschläge vorwiegend Zellglas, also regenerierte Zellulose, nicht orientiertes Polypropylen oder PVC-Folie verwendet, siehe "Verpacken mit Kunststoffen" von Günther Kühne, herausgegeben 1974, Carl-Hanser-Verlag, München, Seite 63.

In neuester Zeit wurden verschiedentlich biaxial orientierte Polypropylenfolien für die Dreheinschlagsanwendung vorgeschlagen.

Die EP-A-0 479 101 betrifft eine mehrschichtige hochtransparente biaxial orientierte Polypropylenfolie mit sehr guten Twisteigenschaften, die insbesondere für den Dreheinschlag geeignet ist. Die Folie ist dadurch gekennzeichnet, daß die Basisschicht aus 70 bis 95 Gew.-% Polypropylen und zu 5 bis 30 Gew.-% aus einem niedrigmolekularen Kohlenwasserstoffharz mit einem Erweichungspunkt von 130 bis 180 °C besteht und die Deckschichten ein Antiblockmittel mit einer mittleren Teilchengröße von 2 bis 5 $\mu$m besitzen und eventuell mit einem Polydimethylsiloxan ausgerüstet sind. Die Deckschichten haben eine Dicke von maximal 0,5 $\mu$m. Die Folien zeichnen sich weiterhin durch hohe mechanische Eigenschaften aus, die in Längs- und in Querrichtung etwa gleich groß sind. Die Folie ist balanced orientiert.

Die EP-A-0 432 452 betrifft eine transparente Dreheinschlagfolie aus Polypropylen, die monoaxial orientiert ist und eine bleibende Dehnung quer zur Orientierungsrichtung von größer als 45 % hat. Die Folie kann gegebenenfalls mit einer oder weiteren Deckschicht/en aus üblichen Deckschichtmaterialien versehen werden.

Die DE-A-35 35 472 wird eine Folie beschrieben, die sich ebenfalls gut für den Dreheinschlag eignet. Durch die Zugabe von Siloxan und Antiblockmittel in den Deckschichten erhält die Folie die gewünschten Verarbeitungseigenschaften auf schnellaufenden Dreheinschlagautomaten. Nachteilig an der Folie sind die relativ hohen Harzgehalte, die für die gute Dreheinschlagsfähigkeit benötigt werden. Als Beispiel werden dort 25 Gew.-% angegeben. Hierdurch verteuert sich die Folie drastisch.

Die bekannten Dreheinschlagsfolien sind verbesserungsbedürftig bezüglich ihres Aussehens, bezüglich ihrer Verarbeitungseigenschaften und insbesondere bezüglich ihrer Kratzfestigkeit. Dreheinschlagsfolien mit üblicher Basisschicht und konventioneller $C_2/C_3$-Copolymerdeckschicht zeigen häufig wolkige Strukturen bzw. optische Inhomogenitäten.

Die deutsche Patentanmeldung P 41 35 096.0 offenbart Polyolefin-Mehrschichtfolien aus einer Polypropylen-Basisschicht und einer Deckschicht aus einem HDPE-Blend. Dieses HDPE-Blend besteht aus HDPE und Co- und/oder Terpolymeren aus $\alpha$-Olefinen und gegebenenfalls Polypropylen. Die Deckschicht der Mehrschichtfolie weist einen minimalen Glanz und eine maximale Trübung auf, wodurch der Folie ein charakteristisches mattes Aussehen verliehen wird.

Aus der US-A-4 578 316 ist eine biaxial orientierte Polyolefin-Mehrschichtfolie bekannt, deren Basisschicht aus einem Polypropylen-Homopolymeren und deren Deckschicht aus einem Blend von Polypropylen und MDPE und/oder HDPE besteht. Diese Polyolefinfolie besitzt einen niedrigen Reibungskoeffizienten in Verbindung mit einer gut benetzbaren Oberfläche; jedoch weist auch dieser Film eine ausgezeichnete optische Transparenz auf.

In der WO 89/10839 werden Polyolefin-Mehrschichtfolien beschrieben, deren Basisschicht aus einem Propylenpolymeren und deren Deckschichten entweder aus HDPE oder einem Ethylen-Propylen-Copolymeren oder einem Polypropylen bestehen, wobei die Folie bei speziellen Temperaturbedingungen gestreckt wird. Sie besitzt insbesondere einen niedrigen Reibungskoeffizienten und eine gute Benetzbarkeit, aber gleichzeitig auch einen hohen Glanz und eine geringe Trübung.

Die EP-A-0 367 613 offenbart eine Mehrschichtfolie aus einer vakuolenhaltigen Polypropylen-Basisschicht und einer Deckschicht, welche beschriftbar ist und ein erstes Polymer mit einem Schmelzflußindex von ≤ 1 g/10 min und ein zweites Polymeres enthält, welches mit dem besagten ersten Polymeren inkompatibel ist. Als Beispiel für das erste Polymer ist ein HDPE mit einer Dichte von 0,92 bis 0,97 g/cm$^3$ beschrieben. Das inkompatible Polymer ist ein Polypropylen oder Copolymere des Polypropylens oder Terpolymere des Polypropylens. Die beschriebene Folie hat ein opakes Aussehen, d. h. sie ist im wesentlichen lichtundurchlässig. Es ist beschrieben, daß die Folie ein mattes Aussehen bekommt, wenn sie mit einer Bedruckung versehen wird. Es ist bevorzugt, in die Deckschicht zusätzlich einen Füllstoff einzuarbeiten, welcher die Beschreibbarkeit verbessern soll, wobei gleichzeitig die SiO$_2$-haltige Deckschicht eine hohe Mattigkeit aufweist, die der Folie ein papierähnliches Aussehen verleiht. Die beschriebene Folie weist eine Dichte von 0,69 g/cm$^3$ auf. Die matte, SiO$_2$-haltige Oberfläche erweist sich bei der Bedruckung als verbesserungswürdig. Die Farbe zeigt einen Grauschleier und kein gleichmäßiges Erscheinungsbild. Dies wird auf Inhomogenitäten zurückgeführt, welche in der Folie selbst durch ihre Opazität nicht so stark erscheinen, aber beim Bedrucken herauskommen. Die bedruckten Folien sind fleckig und werden vom Verarbeiter nicht akzeptiert.

Die aus dem Stand der Technik bekannten Folien mit HDPE-modifizierter Deckschicht sind aufgrund ihrer mechanischen Eigenschaften als Dreheinschlagsfolie nicht geeignet. Darüber hinaus sind die Folien bezüglich ihres Aussehens verbesserungsbedürftig.

Die EP-A-0 619 183 beschreibt eine opake Polypropylen-Mehrschichtfolie mit mindestens einer Basisschicht, enthaltend Polypropylen oder eine Polypropylenmischung und Füllstoffe, und mindestens einer Deckschicht, welche eine Mischung oder ein Blend zweier Komponenten I und II enthält. Die Komponente I enthält im wesentlichen ein Propylenhomopolymeres oder ein Co- oder Terpolymeres aus einem -Olefin mit 2 bis 10 Kohlenstoffatomen oder eine Mischung oder ein Blend aus zwei oder mehreren der genannten Homo-, Co- und Terpolymeren. Die Komponente II ist im wesentlichen ein HDPE mit einem MFI (50 N/190 C) von größer 1 bis 50 g/10 min, gemessen nach DIN 53 735, oder ein Blend zweier Blendkomponenten A und B. Die Blendkomponente A ist im wesentlichen ein HDPE mit einem MFI (50 N/190 C) von größer 1 bis 50 g/10 min, gemessen nach DIN 53 735. Die Blendkomponente B ist im wesentlichen ein Propylenhomopolymeres oder ein Co- oder Terpolymeres aus einem -Olefin mit 2 bis 10 Kohlenstoffatomen oder eine Mischung oder ein Blend aus zwei oder mehreren der genannten Homo-, Co- und Terpolymeren. Die Folie ist matt.

Die Aufgabe der vorliegenden Erfindung bestand darin, eine Mehrschichtfolie zur Verfügung zu stellen, die für den Dreheinschlag geeignet ist und durch ein mattes Erscheinungsbild mindestens einer Oberfläche gekennzeichnet ist sowie gleichzeitig eine gute Kratzfestigkeit aufweist. Der Glanz der Oberfläche/n soll im Hinblick auf diese gewünschte matte Charakteristik optimiert sein. Dabei ist gleichzeitig eine homogene Folienoptik ohne fleckige oder streifige Störstellen und ohne Wolkenstruktur wichtig. Zusätzlich wird ein gleichmäßiges Erscheinungsbild der Bedrukkung gefordert. Gleichzeitig soll die Folie ein gutes Twistverhalten für den Dreheinschlag und gute Laufeigenschaften aufweisen.

Erfindungsgemäß wird diese Aufgabe gelöst durch eine Mehrschichtfolie der eingangs genannten Gattung, wobei

das Verhältnis (Gewichsverhältnis) der beiden Komponenten I und II zwischen I:II = 10-90 und I:II = 90-10 liegt und die Komponente I im wesentlichen

ein Propylenhomopolymeres oder
ein Copolymeres von

Ethylen und Propylen oder
Ethylen und Butylen oder
Propylen und Butylen oder
Ethylen und einem anderen -Olefin mit 5 bis 10 Kohlenstoffatomen oder
Propylen und einem anderen -Olefin mit 5 bis 10 Kohlenstoffatomen oder

ein Terpolymeres von

Ethylen und Propylen und Butylen oder
Ethylen und Propylen und einem anderen -Olefin mit 5 bis 10 Kohlenstoffatomen oder

eine Mischung aus zwei oder mehreren der genannten Homo-, Co- und Terpolymeren oder
ein Blend aus zwei oder mehreren der genannten Homo-, Co- und Terpolymeren, gegebenenfalls gemischt mit

einem oder mehreren der genannten Homo-, Co- und Terpolymeren,

enthält und
die Komponente II im wesentlichen ein HDPE mit einem Schmelzflußindex MFI, gemessen nach DIN 53 735 von 1,5 bis 45 g/10min oder ein Blend zweier Blendkomponenten A und B enthält, wobei
das Verhältnis (Gewichtsverhältnis) der beiden Blendkomponenten A und B zwischen A:B = 20-80 und A:B = 80-20 liegt und
die Blendkomponente A im wesentlichen

ein HDPE mit einem Schmelzflußindex MFI, gemessen nach DIN 53 735 von 1,5 bis 45 g/10min ist und

die Blendkomponente B im wesentlichen

ein Propylenhomopolymeres oder
ein Copolymeres von

Ethylen und Propylen oder
Ethylen und Butylen oder
Propylen und Butylen oder
Ethylen und einem anderen -Olefin mit 5 bis 10 Kohlenstoffatomen oder
Propylen und einem anderen -Olefin mit 5 bis 10 Kohlenstoffatomen oder

ein Terpolymeres von

Ethylen und Propylen und Butylen oder
Ethylen und Propylen und einem anderen -Olefin mit 5 bis 10 Kohlenstoffatomen oder

eine Mischung aus zwei oder mehreren der genannten Homo-, Co- und Terpolymeren oder
ein Blend aus zwei oder mehreren der genannten Homo-, Co- und Terpolymeren

ist und
die Folie eine Trübung gemessen nach ASTM-D 1003 im Bereich von 10 bis 80 hat und die Folie matt ist.

Unter Mischungen im Sinne der vorliegenden Erfindung sind mechanische Mischungen zu verstehen, welche aus den Einzelkomponenten hergestellt werden. Im allgemeinen werden hierzu die einzelnen Bestandteile als gepreßte Formkörper kleiner Größe, z. B. linsen-, kugel- oder stäbchenförmiges Granulat, zusammengeschüttet und mit einer geeigneten Rüttelvorrichtung mechanisch gemischt.

Ein Blend im Sinne der vorliegenden Erfindung ist ein legierungsartiger Verbund der einzelnen Komponenten, welcher nicht mehr in die ursprünglichen Bestandteile zerlegt werden kann. Ein Blend weist Eigenschaften wie ein homogener Stoff auf und kann entsprechend durch geeignete Parameter charakterisiert werden.

Die Basisschicht der erfindungsgemäßen Mehrschichtfolie enthält im wesentlichen ein Propylenpolymer, oder eine Polypropylenmischung, und niedermolekulares Harz.

Das Propylenpolymere der Basisschicht enthält zum überwiegenden Teil (mindestens 90 %) Propylen und besitzt einen Schmelzpunkt von 140 C oder höher, vorzugsweise 150 bis 170 C. Isotaktisches Homopolypropylen mit einem n-heptanlöslichen Anteil von 6 Gew.-% und weniger, bezogen auf das isotaktische Homopolypropylen, Copolymere von Ethylen und Propylen mit einem Ethylengehalt von 10 Gew.-% oder weniger, Copolymere von Propylen mit $C_4$-$C_8$--Olefinen mit einem -Olefingehalt von 10 Gew.-% oder weniger stellen bevorzugte Propylenpolymere für die Basisschicht dar, wobei isotaktisches Homopolypropylen besonders bevorzugt ist. Die angegebenen Gewichtsprozente beziehen sich auf das jeweilige Copolymer. Das Propylenpolymere der Kernschicht hat im allgemeinen einen Schmelzflußindex von 0,5 g/10 min bis 8 g/10 min, vorzugsweise 2 g/10 min bis 5 g/10 min, bei 230 °C und einer Kraft von 21,6 N (DIN 53 735).

Gegebenenfalls kann das in der Basisschicht eingesetzte Propylenpolymere durch den Zusatz von organischen Peroxiden teilabgebaut werden. Ein Maß für den Grad des Abbaus des Polymeren ist der sogenannte Abbaufaktor A, welcher die relative Änderung des Schmelzflußindex nach DIN 53 735 des Polypropylens, bezogen auf das Ausgangspolymere, angibt.

$$A = \frac{MFI_2}{MFI_1}$$

$MFI_1$ = Schmelzflußindex des Propylenpolymeren vor dem Zusatz des organischen Peroxids

$MFI_2$ = Schmelzflußindex des peroxidisch abgebauten Propylenpolymeren

Im allgemeinen liegt der Abbaufaktor A des eingesetzten Propylenpolymeren in einem Bereich von 3 bis 15, vorzugsweise 6 bis 10.

Als organische Peroxide sind Dialkylperoxide besonders bevorzugt, wobei unter einem Alkylrest die üblichen gesättigten geradkettigen oder verzweigten niederen Alkylreste mit bis zu sechs Kohlenstoffatomen verstanden werden. Insbesondere sind 2,5-Dimethyl-2,5-di(t-butylperoxy)-hexan oder Di-t-butylperoxid bevorzugt.

Die Basisschicht der erfindungsgemäßen Folie enthält ein niedermolekulares Harz, im allgemeinen in einer Menge von 5 bis 40 Gew.-%, vorzugsweise 10 bis 40 Gew.-%, insbesondere 15 bis 35 Gew.-%, bezogen auf das Gewicht der Basisschicht. Als Harze sind Kohlenwasserstoffharze bevorzugt.

Die Kohlenwasserstoffharze können teilweise oder vollständig hydriert sein. Als Harze kommen grundsätzlich synthetische Harze oder Harze natürlichen in Frage. Es hat sich als besonders vorteilhaft erwiesen, Harze mit einem Erweichungspunkt von ≥80 °C (gemessen nach DIN 1995-U4 bzw. ASTM E-28) einzusetzen, wobei solche mit einem Erweichungspunkt von 100 bis 180 °C, insbesondere 120 bis 160 °C, bevorzugt sind. Die Einarbeitung des Harzes in die Folie (z. B. Einschnecken- oder Kaskadenextruder) erfolgt vorzugsweise in Form eines Masterbatches, welches in den Extruder zugegeben wird. Üblich sind beispielsweise Masterbatche, in denen 30 bis 70 Gew.-%, vorzugsweise 50 Gew.-%, Propylenhomopolymeres und 70 bis 30 Gew.-%, vorzugsweise 50 Gew.-%, Kohlenwasserstoffharz enthalten sind. Die Angaben in Gew.-% beziehen sich auf das Gesamtgewicht an Propylenpolymer und Kohlenwasserstoffharz.

Unter den zahlreichen Harzen sind Kohlenwasserstoffharze bevorzugt, und zwar in Form der Erdölharze (Petroleumharze), Styrolharze, Cyclopentadienharze und Terpenharze (diese Harze sind in Ullmanns Encyklopädie der techn. Chemie, 4. Auflage, Band 12, Seiten 525 bis 555, beschrieben).

Die Erdölharze sind solche Kohlenwasserstoffharze, die durch Polymerisation von tiefzersetzten (deep-decomposed) Erdölmaterialien in Gegenwart eines Katalysators hergestellt werden. Diese Erdölmaterialien enthalten gewöhnlich ein Gemisch von harzbildenden Substanzen wie Styrol, Methylstyrol, Vinyltoluol, Inden, Methylinden, Butadien, Isopren, Piperylen und Pentylen. Die Styrolharze sind niedrigmolekulare Homopolymere von Styrol oder Copolymere von Styrol mit anderen Monomeren wie Methylstyrol, Vinyltoluol und Butadien. Die Cyclopentadienharze sind Cyclopentadienhomopolymere oder Cyclopentadiencopolymere, die aus Kohlenteerdestillaten und zerlegtem Erdölgas erhalten werden. Diese Harze werden hergestellt, indem die Materialien, die Cyclopentadien enthalten, während einer langen Zeit bei hoher Temperatur gehalten werden. In Abhängigkeit von der Reaktionstemperatur können Dimere, Trimere oder Oligomere erhalten werden.

Die Terpenharze sind Polymerisate von Terpenen, d. h. Kohlenwasserstoffen der Formel $C_{10}H_{16}$, die in fast allen etherischen Ölen oder ölhaltigen Harzen von Pflanzen enthalten sind, und phenolmodifizierte Terpenharze. Als spezielle Beispiele der Terpene sind Pinen, $\alpha$-Pinen, Dipenten, Limonen, Myrcen, Camphen und ähnliche Terpene zu nennen.

Als Kohlenwasserstoffharze werden außerdem Styrolhomopolymerisate, Styrolcopolymerisate, Cyclopentadienhomopolymerisate, Cyclopentadiencopolymerisate und/oder Terpenpolymerisate mit einem Erweichungspunkt von jeweils oberhalb 100 °C eingesetzt (bei den ungesättigten Polymerisaten ist das hydrierte Produkt bevorzugt). Ganz besonders bevorzugt werden die Cyclopentadienpolymerisate mit einem Erweichungspunkt von 140 °C und darüber in der Basisschicht eingesetzt.

Bei den Kohlenwasserstoffharzen kann es sich auch um die sogenannten modifizierten Kohlenwasserstoffharze handeln. Die Modifizierung erfolgt im allgemeinen durch Reaktion der Rohstoffe vor der Polymerisation, durch Einführung spezieller Monomere oder durch Reaktion des polymerisierten Produkts, wobei insbesondere Hydrierungen oder Teilhydrierungen vorgenommen werden.

Mindestens eine Deckschicht der erfindungsgemäßen Mehrschichtfolie enthält eine im folgenden näher beschriebene Mischung bzw. ein Blend zweier Komponenten I und II und gegebenenfalls zugesetzte Additive.

Die Komponente I der Deckschichtmischung bzw. des Blends enthält im wesentlichen

ein Propylenhomopolymer oder

ein Copolymer von

Ethylen und Propylen oder
Ethylen und Butylen oder
Propylen und Butylen oder
Ethylen und einem anderen $\alpha$-Olefin mit 5 bis 10 Kohlenstoffatomen oder
Propylen und einem anderen $\alpha$-Olefin mit 5 bis 10 Kohlenstoffatomen oder

ein Terpolymer von

Ethylen und Propylen und Butylen oder

Ethylen und Propylen und einem anderen α-Olefin mit 5 bis 10 Kohlenstoffatomen oder

eine Mischung aus zwei oder mehreren der genannten Homo-, Co- und Terpolymeren oder
ein Blend aus zwei oder mehreren der genannten Homo-, Co- und Terpolymeren, gegebenenfalls gemischt mit einem oder mehreren der genannten Homo-, Co- und Terpolymeren.

Besonders bevorzugt besteht die Komponente I im wesentlichen aus

einem Propylenhomopolymeren oder aus
einem Copolymeren von

Ethylen und Propylen oder
Ethylen und Butylen-1 oder
Propylen und Butylen-1 oder aus

einem Terpolymeren von

Ethylen und Propylen und Butylen-1 oder aus

einer Mischung aus zwei oder mehreren der genannten besonders bevorzugten Homo-, Co- und Terpolymeren oder aus
einem Blend aus zwei oder mehreren der genannten besonders bevorzugten Homo-, Co- und Terpolymeren, gegebenenfalls gemischt mit
einem oder mehreren der genannten Homo-, Co- und Terpolymeren,

wobei insbesondere Propylenhomopolymer oder

statistische Ethylen-Propylen-Copolymere mit

einem Ethylengehalt von 2 bis 10 Gew.-%, bevorzugt 5 bis 8 Gew.-%, oder

statistische Propylen-Butylen-1-Copolymere mit

einem Butylengehalt von 4 bis 25 Gew.-% bevorzugt 10 bis 20 Gew.-%,

jeweils bezogen auf das Gesamtgewicht des Copolymeren, oder
statistische Ethylen-Propylen-Butylen-1-Terpolymere mit

einem Ethylengehalt von 1 bis 10 Gew.-%, bevorzugt 2 bis 6 Gew.-%, und
einem Butylen-1-Gehalt von 3 bis 20 Gew.-%, bevorzugt 8 bis 10 Gew.-%,
jeweils bezogen auf das Gesamtgewicht des Terpolymeren, oder

ein Blend aus einem Ethylen-Propylen-Butylen-1-Terpolymeren und einem Propylen-Butylen-1-Copolymeren

mit einem Ethylengehalt von 0,1 bis 7 Gew.-%
und einem Propylengehalt von 50 bis 90 Gew.-%
und einem Butylen-1-Gehalt von 10 bis 40 Gew.-%,
jeweils bezogen auf das Gesamtgewicht des Polymerblends,

bevorzugt sind.
Das als oder in der Komponente I eingesetzte Propylenhomopolymere enthält zum überwiegenden Teil (mindestens 90 %) Propylen und besitzt einen Schmelzpunkt von 140 °C oder höher, vorzugsweise 150 bis 170 °C, wobei isotaktisches Homopolypropylen mit einem n-heptanlöslichen Anteil von 6 Gew.-% und weniger, bezogen auf das isotaktische Homopolypropylen, bevorzugt ist. Das Homopolymere der Komponente I bzw. das in dieser enthaltene Homopolymere hat im allgemeinen einen Schmelzflußindex von 0,5 g/10 min bis 15 g/10 min, vorzugsweise 1,5 g/10 min bis 6 g/10 min, bei 230 °C und einer Kraft von 21,6 N (DIN 53 735).
Die Komponente II der Deckschichtmischung bzw. des Blends enthält im wesentlichen ein HDPE oder ein Blend, welches im wesentlichen HDPE als Blendkomponente A und eine Blendkomponente B umfaßt.

Unter HDPE werden im Sinne der vorliegenden Erfindung Hochdruckpolyethylene verstanden, welche die folgenden Eigenschaften aufweisen:

1. Der Schmelzflußindex MFI, gemessen nach DIN 53 735 oder ISO 1133 bei 50 N/190 °C, liegt im Bereich von 1,5 bis 45 g/10 min, insbesondere 5 bis 25 g/10 min.
2. Die Viskositätszahl, gemessen nach DIN 53 728, Teil 4, oder ISO 1191, liegt im Bereich von 100 bis 450 $cm^3$/g, vorzugsweise 120 bis 280 $cm^3$/g.
3. Die Kristallinität beträgt 35 bis 80 %, vorzugsweise 50 bis 80 %.
4. Die Dichte, gemessen bei 23 °C nach DIN 53 479, Verfahren A, oder ISO 1183, liegt im Bereich von 0,93 bis 0,97 $g/cm^3$, vorzugsweise 0,95 bis 0,96 $g/cm^3$.
5. Der Schmelzpunkt, gemessen mit DSC (Maximum der Schmelzkurve, Aufheizgeschwindigkeit 20 °C/min), liegt zwischen 120 und 150 °C, vorzugsweise zwischen 125 und 135 °C).

Das HDPE als Komponente II als auch HDPE als Blendkomponente A wird aus den vorstehend beschriebenen Polyethylenen ausgewählt, so daß als Komponente II grundsätzlich das gleiche HDPE wie als Blendkomponente A in Frage kommt, aber nicht identisch sein muß.

Die Blendkomponente B besteht im wesentlichen aus

einem Propylenhomopolymeren oder aus
einem Copolymeren von

Ethylen und Propylen oder
Ethylen und Butylen oder
Propylen und Butylen oder
Ethylen und einem anderen $\alpha$-Olefin mit 5 bis 10 Kohlenstoffatomen oder
Propylen und einem anderen $\alpha$-Olefin mit 5 bis 10 Kohlenstoffatomen oder aus

einem Terpolymeren von

Ethylen und Propylen und Butylen oder
Ethylen und Propylen und einem anderen $\alpha$-Olefin mit 5 bis 10 Kohlenstoffatomen oder aus

einer Mischung aus zwei oder mehreren der genannten Homo-, Co- und Terpolymeren oder aus
einem Blend aus zwei oder mehreren der genannten Homo-, Co- und Terpolymeren.

Besonders bevorzugt besteht die Blendkomponente B im wesentlichen aus

einem Propylenhomopolymeren oder aus
einem Copolymeren von

Ethylen und Propylen oder
Ethylen und Butylen-1 oder
Propylen und Butylen-1 oder aus

einem Terpolymeren von

Ethylen und Propylen und Butylen-1 oder aus

einer Mischung aus zwei oder mehreren der genannten besonders bevorzugten Homo-, Co- und Terpolymeren oder aus
einem Blend aus zwei oder mehreren der genannten besonders bevorzugten Homo-, Co- und Terpolymeren,

wobei insbesondere Propylenhomopolymer oder

statistische Ethylen-Propylen-Copolymere mit

einem Ethylengehalt von 2 bis 10 Gew.-%, bevorzugt 5 bis 8 Gew.-%, oder

statistische Propylen-Butylen-1-Copolymere mit

einem Butylengehalt von 4 bis 25 Gew.-%, bevorzugt 10 bis 20 Gew.-%,

jeweils bezogen auf das Gesamtgewicht des Copolymeren, oder
statistische Ethylen-Propylen-Butylen-1-Terpolymere mit

einem Ethylengehalt von 1 bis 10 Gew.-%, bevorzugt 2 bis 6 Gew.-%, und
einem Butylen-1-Gehalt von 3 bis 20 Gew.-%, bevorzugt 8 bis 10 Gew.-%,
jeweils bezogen auf das Gesamtgewicht des Terpolymeren, oder

ein Blend aus einem Ethyen-Propylen-Butylen-1-Terpolymeren und einem Propylen-Butylen-1-Copolymeren

mit einem Ethylengehalt von 0,1 bis 7 Gew.-%
und einem Propylengehalt von 50 bis 90 Gew.-%
und einem Butylen-1-Gehalt von 10 bis 40 Gew.-%,
jeweils bezogen auf das Gesamtgewicht des Polymerblends,

bevorzugt sind.

Das als oder in der Blendkomponente B eingesetzte Propylenhomopolymere enthält zum überwiegenden Teil (mindestens 90 %) Propylen und besitzt einen Schmelzpunkt von 140 °C oder höher, vorzugsweise 150 bis 170 °C, wobei isotaktisches Homopolypropylen mit einem n-heptanlöslichen Anteil von 6 Gew.-% und weniger, bezogen auf das isotaktische Homopolypropylen, bevorzugt ist. Das Homopolymere der Blendkomponente B bzw. das in dieser enthaltene Homopolymere hat im allgemeinen einen Schmelzflußindex von 0,5 g/10 min bis 15 g/10 min, vorzugsweise 1,5 g/10 min bis 6 g/10 min, bei 230 °C und einer Kraft von 21,6 N (DIN 53 735).

Das Verhältnis (Gewichtsverhältnis) der beiden Blendkomponenten A und B liegt zwischen A:B = 20:80 und A:B = 80:20, vorzugsweise zwischen A:B = 40:60 und A:B = 60:40, und liegt insbesondere bevorzugt bei A:B = 45:55.

Das Blend aus den Komponenten A und B hat einen Schmelzflußindex (DIN 53 735 bei 230 °C und 21,6 N Belastung) von 1,5 g/10 min bis 12 g/10 min, vorzugsweise von 2,5 g/10 min bis 6 g/10 min, wobei der Schmelzflußindex des Blends bevorzugt höher liegt als jener des Propylenpolymeren der Basisschicht.

Der Schmelzbereich des Blends liegt zwischen 100 und 160 °C, vorzugsweise zwischen 120 und 150 °C.

Das Verhältnis (Gewichtsverhältnis) der beiden Komponenten I und II der Deckschichtmischung bzw. des Blends kann innerhalb weiter Grenzen variieren und richtet sich nach dem beabsichtigten Einsatzzweck der Mehrschichtfolie. Das Verhältnis der Komponenten I und II liegt in einem Bereich von I:II = 10:90 bis I:II = 90:10, vorzugsweise zwischen I:II = 30:70 bis I:II = 70:30, insbesondere bei I:II = 50:50.

Die erfindungsgemäße Mehrschichtfolie umfaßt zumindest die vorstehend beschriebene harzhaltige Basisschicht und mindestens eine matte Deckschicht, welche die vorstehend beschriebene Mischung enthält. Je nach ihrem vorgesehenen Verwendungszweck kann die Mehrschichtfolie eine weitere Deckschicht auf der gegenüberliegenden Seite aufweisen. Gegebenenfalls kann/können auch eine oder mehrere Zwischenschicht/en zwischen der Basis- und der/den Deckschicht/en aufgebracht werden.

Bevorzugte Ausführungsformen der Mehrschichtfolie sind dreischichtig. Aufbau, Dicke und Zusammensetzung einer zweiten Deckschicht können unabhängig von der bereits vorhandenen erfindungsgemäßen matten Deckschicht gewählt werden, wobei die zweite Deckschicht ebenfalls eine der vorstehend beschriebenen Mischungen enthalten kann, welche aber nicht mit der der ersten Deckschicht identisch sein muß. Die zweite Deckschicht kann jedoch auch jedes andere gängige Deckschichtpolymer enthalten.

Die Dicke der Deckschicht/en ist größer als 0,3 μm und liegt vorzugsweise im Bereich von 0,8 bis 10 μm, insbesondere 1 bis 5 μm, wobei beidseitige Deckschichten gleich oder verschieden dick sein können.

Die Gesamtdicke der erfindungsgemäßen Polyolefin-Mehrschichtfolie kann innerhalb weiter Grenzen variieren und richtet sich nach dem beabsichtigten Einsatz. Sie beträgt vorzugsweise 5 bis 100 μm, insbesondere 10 bis 80 μm, wobei die Basisschicht etwa 50 bis 95 % der Gesamtfoliendicke ausmacht.

Die Dichte der Folie liegt im allgemeinen bei 0,9 g/cm$^2$ oder darüber, vorzugsweise im Bereich von 0,9 bis 0,95 g/cm$^2$.

Zur Verbesserung der Hafteigenschaften der Deckschicht/en kann mindestens eine Oberfläche der Folie corona- oder flammbehandelt werden, wobei gegebenenfalls die entsprechende Behandlung an beiden Oberflächen vorgenommen werden und gleich oder verschieden sein kann.

Um bestimmte Eigenschaften der erfindungsgemäßen Polyolefinfolie noch weiter zu verbessern, können sowohl die Basisschicht als auch die Deckschicht/en weitere Zusätze in einer jeweils wirksamen Menge enthalten, vorzugsweise Antistatika und/oder Antiblockmittel und/oder Gleitmittel und/oder Stabilisatoren und/oder Neutralisationsmittel, die mit den Propylenpolymeren der Basisschicht und der Deckschicht/en verträglich sind, mit Ausnahme der Antiblockmittel, die im allgemeinen unverträglich sind. Alle Mengenangaben in der folgenden Ausführung in Gewichtsprozent (Gew.-%) beziehen sich jeweils auf die Schicht oder Schichten, der oder denen das Additiv zugesetzt sein kann.

Bevorzugte Antistatika sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit $\omega$-Hydroxy-$(C_1$-$C_4)$-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,3 Gew.-%. Des weiteren wird Glycerinmonostearat in einer Menge von 0,03 % bis 0,2 % bevorzugt als Antistatikum eingesetzt.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, bevorzugt werden Benzoguanaminformaldehyd-Polymere, Siliciumdioxid und Calciumcarbonat. Die wirksame Menge an Antiblockmittel liegt im Bereich von 0,1 bis 2 Gew.-%, vorzugsweise 0,1 bis 0,5 Gew.-%. Die mittlere Teilchengröße liegt zwischen 1 und 6 $\mu$m, insbesondere 2 und 5 $\mu$m, wobei Teilchen mit einer kugelförmigen Gestalt, wie in der EP-A-0 236 945 und der DE-A-38 01 535 beschrieben, besonders geeignet sind. Bevorzugt werden die Antiblockmittel den Deckschichten zugesetzt.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,01 bis 3 Gew.-%, vorzugsweise 0,05 bis 1 Gew.-%. Besonders geeignet ist der Zusatz von höheren aliphatischen Säureamiden im Bereich von 0,01 bis 0,25 Gew.-% in der Basisschicht und/oder den Deckschichten. Ein insbesondere geeignetes aliphatisches Säureamid ist Erucasäureamid.

Der Zusatz von Polydimethylsiloxanen ist im Bereich von 0,05 bis 2,0 Gew.-% bevorzugt, insbesondere Polydimethylsiloxane mit einer Viskosität von 10 000 bis 1 000 000 mm$^2$/s. Besonders günstig ist der Zusatz der Polydimethylsiloxane in eine oder beide Deckschichten.

Als Stabilisatoren können die üblichen stabilisierend wirkenden Verbindungen für Ethylen-, Propylen- und andere $\alpha$-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate.

Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Neutralisationsmittel sind vorzugsweise Calciumstearat und/oder Calciumcarbonat und/oder synthetisches Dihydrotalcit (SHYT) einer mittleren Teilchengröße von höchstens 0,7 $\mu$m, einer absoluten Teilchengröße von kleiner 10 $\mu$m und einer spezifischen Oberfläche von mindestens 40 m$^2$/g.

Die Erfindung betrifft weiterhin ein Verfahren zur Herstellung der erfindungsgemäßen Mehrschichtfolie nach dem an sich bekannten Coextrusionsverfahren. Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Coronabehandlung vorgesehenen Oberflächenschicht coronabehandelt wird.

Die biaxiale Streckung (Orientierung) wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist.

Zunächst wird wie beim Coextrusionsverfahren üblich das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können oder während der Extrusion in den Extruder zugegeben werden. Insbesondere die Harze werden bevorzugt in Form eines Masterbatches zugegeben. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Die so erhaltene Folie wird dann längs und quer zur Extrusionsrichtung gestreckt, was zu einer Orientierung der Molekülketten führt. Erfindungsgemäß werden die Bedingungen in der Längs- und in der Querrichtung so gewählt, daß die Folie in Längs- und Querrichtung in etwa balanced orientiert ist und weitgehend isotrope mechanische Eigenschaften hat. Beispielsweise beträgt das Verhältnis der bleibenden Dehnung oder der Reißfestigkeit in Querrichtung zur bleibenden Dehnung oder Reißfestigkeit in Längsrichtung maximal 2,0. Die Voraussetzungen für die Erzielung von sehr guten Twisteigenschaften sind dann besonders günstig. Weiterhin hat sich gezeigt, daß die Drehfähigkeit um so besser wird, je höher die Folie längsverstreckt ist. Die erfindungsgemäßen Längsstreckungsverhältnisse sind 5,5 bis 9, vorzugsweise 6 bis 8,0. Dementsprechend sind auch die Querstreckverhältnisse zu wählen. Vorzugsweise ergibt sich hier ein Bereich von 6,0 bis 8,0. Zweckmäßigerweise wird die Folie nicht - wie dies bei anderen Verpackungsfolien der Fall ist - hochquerverstreckt. Die Anwendungen von einem Längsstreckverhältnis von $\lambda = 5$ und einem Querstreckverhältnis von $\lambda = 10$ ergibt - auch bei der Zugabe von hohen Harzmengen - eine Folie mit vergleichsweise schlechter Twistfähigkeit. Zur Erzielung der erfindungswesentlichen Twisteigenschaften ist ein Verhältnis der Streckverhältnisse von quer/längs von kleiner 2, vorzugsweise kleiner 1,5, einzuhalten. Besonders bevorzugt liegt dieses Verhältnis im Bereich von 0,5 bis 1,5. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens.

An die biaxiale Streckung der Folie schließt sich ihre Thermofixierung (Wärmebehandlung) an, wobei die Folie etwa 0,5 bis 10 s lang bei einer Temperatur von 140 bis 160 °C gehalten wird. Anschließend wird die Folie in üblicher Weise mit einer Aufwickeleinrichtung aufgewickelt.

Es hat sich als besonders günstig erwiesen, die Abzugswalze oder -walzen, durch die die ausgepreßte Folie auch abgekühlt und verfestigt wird, durch einen Heiz- und Kühlkreislauf bei einer Temperatur von 20 bis 100 °C, vorzugsweise 40 bis 90 °C, zu halten.

Die Temperaturen, bei denen Längs- und Querstreckung durchgeführt werden, können in einem relativ großen Bereich variieren und richten sich nach der jeweiligen Zusammensetzung der Deckschichtmischung und nach den gewünschten Eigenschaften der Folie. Im allgemeinen wird die Längsstreckung vorzugsweise bei 90 bis 170 °C und die Querstreckung vorzugsweise bei 120 bis 150 °C durchgeführt.

Gegebenenfalls kann/können wie oben erwähnt nach der biaxialen Streckung eine oder beide Oberfläche/n der Folie nach einer der bekannten Methoden corona- oder flammbehandelt werden. Die Behandlungsintensität liegt im allgemeinen im Bereich von 37 bis 45 mN/m, vorzugsweise 39 bis 40 mN/m.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 5 bis 20 kV und 5 bis 30 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Für eine Flammbehandlung mit polarisierter Flamme (vgl. US-A-4,622,237) wird eine elektrische Gleichspannung zwischen einem Brenner (negativer Pol) und einer Kühlwalze angelegt. Die Höhe der angelegten Spannung beträgt zwischen 500 und 3 000 V, vorzugsweise liegt sie im Bereich von 1 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaften der behandelten Seite sogar besser sind als diejenigen der nicht behandelten Seite.

Die erfindungsgemäße Mehrschichtfolie zeichnet sich durch eine sehr homogene Folienoptik, ein charakteristisches mattes Aussehen und eine ausgezeichnete Kratzfestigkeit aus.

Es wurde gefunden, daß bei Einarbeitung der oben beschriebenen Polyethylene in eine Propylenhomopolymer-, Propylencopolymer- bzw. Propylenterpolymer-Deckschicht überraschenderweise eine sehr homogene Folienoptik mit der gewünschten matten Charakteristik erzielt werden konnte.

Die optimierte matte Oberfläche erzeugt ein papierähnliches Erscheinungsbild der Folie, welches im Verpackungsbereich für bestimmte Anwendungen besonders wünschenswert ist. Überraschenderweise hat sich erwiesen, daß nicht allein die Minimierung von Glanz den gewünschten optischen Effekt bringt, sondern daß vielmehr eine ausgewogene Optimierung der Eigenschaften erforderlich ist, welche durch die spezielle Deckschichtzusammensetzung gemäß Anspruch 1 überraschenderweise möglich ist.

Die Anforderung "matte Erscheinung" wird dann besonders gut erfüllt, wenn die Glanzwerte der Folie unter 80 (ASTM-D 523-78), vorzugsweise im Bereich von 10 bis 65, liegen (Meßwinkel 85°) und die Trübung (gemessen nach ASTM-D 1003) im Bereich von 10 bis 80, vorzugsweise 30 bis 70, liegt.

Die Mehrschichtfolie weist eine hervorragende Bedruckbarkeit und ein besonders gleichmäßiges einwandfreies Druckbild auf. Die Farben sind klar und ohne Grauschleier. Es treten auch bei der bedruckten Folie keine Flecken oder sonstige Störstellen auf. Die Oberflächenspannung ist überraschend hoch und fällt auch nach einer mehrmonatigen Lagerzeit nur unwesentlich ab.

Es wurde gefunden, daß die Einarbeitung von Harz in die Basisschicht der Folie mit der erfindungsgemäßen Deckschicht vorteilhafte Auswirkungen auf die Folieneigenschaften hat. Insbesondere trägt das Harz zu einem besonders gleichmäßigen Aussehen der Folie bei, wobei das matte Erscheinungsbild überraschenderweise nicht beeinträchtigt wird. Dies überraschte ganz besonders, da im Stand der Technik bekannte Lehren den Harzzusatz zur Erhöhung der Glanzwerte empfehlen. Zusätzlich verbessert das Harz die Kratzfestigkeit der Deckschicht in erheblichem Maße.

Diese Auswirkung auf die spezielle Deckschichtzusammensetzung gemäß Anspruch 1 war nicht vorhersehbar und auch nicht ohne weiteres zu erwarten.

Darüber hinaus zeichnet sich die Folie durch hervorragende Twisteigenschaften aus. Die Twistfähigkeit der Folie kann sehr gut durch zwei physikalische Größen der Folie beschrieben werden. Die Twistfähigkeit ist umso besser, je größer die bleibende Dehnung (in Längs- und Querrichtung; Meßmethode s. Beispiele) und je kleiner die Reißdehnung in Längsrichtung ist. Die Werte der obigen physikalischen Größen sollten in beiden Richtungen etwa gleich groß sein. Das Verhältnis der Werte für die bleibende Dehnung $D_{bQ}:D_{bL}$ liegt im allgemeinen unter 2,0. Vorzugsweise liegt das Verhältnis $D_{bQ}:D_{bL}$ im Bereich von 0,5 bis 1,5, insbesondere im Bereich von 0,7 bis 1,3. Entsprechende Verhältnisse bilden auch die Werte für Reißdehnung quer und längs.

Eine gute Twistfähigkeit ist gegeben, wenn die bleibenden Dehnwerte für beide Richtungen über 50 %, vorzugsweise im Bereich von 50 bis 70 %, liegen.

Die Reißdehnung wird - wie der E-Modul und die Reißfestigkeit - nach DIN 53 455 bestimmt. Die erfindungsgemäßen Folien haben Reißdehnwerte in beiden Richtungen von kleiner 120 %, vorzugsweise kleiner 100 %.

Zusammenfassend ist festzustellen, daß sich die erfindungsgemäße Mehrschichtfolie durch eine Vielzahl vorteilhafter Eigenschaften auszeichnet, insbesondere durch

- einen charakteristischen matten Glanz von kleiner 80 bei einem Meßwinkel von 85° (ASTM-D-523-78),
- eine sehr gute Bedruckbarkeit,
- eine besonders gleichmäßige Folienoptik,
- eine hervorragende Kratzfestigkeit und
- sehr gute Twisteigenschaften.

Durch diese überraschende Vielzahl ausgezeichneter Eigenschaften wird erfindungsgemäß eine Folie zur Verfügung gestellt, welche sich für den vorgesehenen Verwendungszweck als Dreheinschlagsfolie hervorragend eignet.

Die Erfindung wird nun anhand von Ausführungsbeispielen gemäß der nachstehenden Tabelle 1 noch näher erläutert.

Tabelle 1

| | Komponente I | Komponente II | I:II |
|---|---|---|---|
| B1 | $C_3$-Homopolymerisat | HDPE + $C_3$-Homopolmyerisat | 50:50 |
| B2 | $C_2/C_3$-Copolymerisat | HDPE + $C_3$-Homopolymerisat | 50:50 |
| B3 | $C_2/C_3$-Copolymerisat | HDPE + $C_3$-Homopolymerisat | 70:30 |
| B4 | $C_2/C_3/C_4$-Terpolymerisat + $C_3/C_4$-Copolymerisat | HDPE + $C_2/C_3$-Copolymerisat | 60:40 |
| B5 | $C_2/C_3$-Copolymerisat | HDPE + $C_2/C_3$-Copolymerisat | 50:50 |
| B6 | $C_2/C_3$-Copolymerisat | HDPE + $C_2/C_3$-Copolymerisat | 70:30 |
| B7 | $C_2/C_3$-Copolymerisat | HDPE + $C_2/C_3/C_4$-Terpolymerisat | 50:50 |
| B8 | $C_2/C_3$-Copolymerisat | HDPE + $C_2/C_3/C_4$-Terpolymerisat | 70:30 |
| B9 | $C_2/C_3$-Copolymerisat | HDPE + $C_2/C_3/C_4$-Terpolymerisat + $C_3/C_4$-Copolymerisat | 50:50 |
| B10 | $C_2/C_3/C_4$-Terpolymerisat | HDPE + $C_2/C_3/C_4$-Terpolymerisat + $C_3/C_4$-Copolymerisat | 50:50 |
| B11 | $C_2/C_3/C_4$-Terpolymerisat | HDPE + $C_2/C_3/C_4$-Terpolymerisat | 50:50 |
| B12 | $C_3$-Homopolymerisat | HDPE | 50:50 |
| B13 | $C_2/C_3$-Copolymerisat | HDPE | 50:50 |
| B14 | $C_2/C_3$-Copolymerisat | HDPE | 70:30 |
| B15 | $C_2/C_3/C_4$-Terpolymerisat | HDPE | 50:50 |
| B16 | $C_2/C_3/C_4$-Terpolymerisat | HDPE | 70:30 |
| B = Beispiel | | | |

**Beispiel 1**

Nach dem Coextrusionsverfahren wurde aus einer Breitschlitzdüse bei einer Extrusionstemperatur von 220 °C als Summe eine 1 mm dicke Dreischichtfolie mit einem Schichtaufbau XZX extrudiert, d. h. die Basisschicht Z war von zwei gleichen Deckschichten X umgeben.

Die Basisschicht bestand aus einem Gemisch von Propylenhomopolymerisat mit einem nheptanlöslichen Anteil von 4,5 Gew.-% und einem Schmelzpunkt von 165 °C und einem Kohlenwasserstoffharz (ein Cyclopentadienharz) mit einem Erweichungspunkt von 140 °C. Der Harzanteil in der Basisschicht betrug 30 %. Verwendet wurde ein Harz der Fa. Exxon (ECR 356) in Form eines 50%igen Masterbatches. Der Name des Harzbatches war ®Exxelor PA 609. Der Schmelzflußindex des Propylenhomopolymeren lag bei 3,2 g/10 min bei 230 °C und 21,6 N Belastung (DIN 53 735). Zusätzlich enthielt die Basisschicht 0,15 Gew.-% eines N,N-bis(hydroxyethyl)-($C_{10}$-$C_{20}$)-alkylamins (®Armostat 300) und 0,1 Gew.-% Erucasäureamid.

Die beiden Deckschichten X bestanden im wesentlichen aus einer mechanischen Mischung aus den Komponenten I und II im Verhältnis I:II = 50:50.

Komponente I bestand aus einem Propylenhomopolymerisat mit einem n-heptanlöslichen Anteil von 4,5 Gew.-% und einem Schmelzpunkt von 165 °C. Der Schmelzflußindex des Propylenhomopolymeren lag bei 6,0 g/10 min bei 230 °C und 21,6 N Belastung (DIN 53 735).

Komponente II bestand aus einem Blend zweier Komponenten A und B im Verhältnis A:B = 50:50. Die Komponente A bestand aus einem HDPE mit einem MFI (50 N/190 °C) von 11 g/10 min (gemessen nach DIN 53 735), einer Viskositätszahl von 160 $cm^3$/g (gemessen nach DIN 53 728, Teil 4), einer Dichte von 0,954 g/$cm^3$ (gemessen nach DIN 53 479, Verfahren A), einem Kristallisationsgrad von 68 % und einem Schmelzpunkt von 132 °C nach DSC-Messung. Die Komponente B bestand aus einem Propylenhomopolymerisat mit einem n-heptanlöslichen Anteil von 4,5 Gew.-% und einem Schmelzpunkt von 165 °C. Der Schmelzflußindex der Komponente B lag bei 7,0 g/10 min bei 230 °C und 21,6 N Belastung (DIN 53 735).

Die Komponenten I und II wurden im Verhältnis I:II = 50:50 in einem Henschel-Mischer 2 min lang bei 500 Upm mechanisch gemischt, so daß eine homogene Granulatmischung resultiert.

Alle Schichten enthielten zur Stabilisierung 0,12 Gew.-% Pentaerythrityl-Tetrakis-4-(3,5-ditertiärbutyl-4-hydroxyphenyl)-propionat (®Irganox 1010) sowie als Neutralisationsmittel 0,06 Gew.-% Calciumstearat.

Die extrudierte Dreischichtfolie wurde über die entsprechenden Verfahrensschritte nach der Coextrusion über eine Abzugswalze abgezogen und abgekühlt, anschließend längsgestreckt, quergestreckt, fixiert und coronabehandelt, wobei im einzelnen die folgenden Bedingungen gewählt wurden:

| | |
|---|---|
| Extrusion: | Extrusionstemperatur 220 °C |
| | Temperatur der Abzugswalze 40 °C |
| Längsstreckung: | Streckwalze T = 110 °C |
| | Längsstreckung um den Faktor 6,5 |
| Querstreckung: | Aufheizfelder T = 150 °C |
| | Streckfelder T = 150 °C |
| | Querstreckung um den Faktor 7,5 |
| Fixierung: | Temperatur T = 110 °C |
| Coronabehandlung: | Spannung: 10 000 V |
| | Frequenz: 10 000 Hz |

Die so hergestellte Mehrschichtfolie hatte beidseitig eine matte Oberfläche und wies direkt nach der Herstellung eine Oberflächenspannung von 40 bis 41 mN/m auf.

Die Folie war nahezu isotrop orientiert und wies ein hervorragendes Twistverhalten auf. Außerdem war die Folie sehr kratzfest.

Die Folie war ca. 21 μm dick, wobei die Basisschicht 19 μm und jede Deckschicht 100 μm Dicke hatte.

**Beispiel 2**

Beispiel 1 wurde wiederholt. Komponente I bestand aus einem statistischen Ethylen-Propylen-Copolymeren mit einem Ethylengehalt von 5 Gew.-%, bezogen auf das Gewicht des Copolymeren. Der Schmelzpunkt des Copolymeren lag bei 134 °C, wobei der Schmelzflußindex 7,0 g/10 min betrug.

**Beispiel 3**

Beispiel 2 wurde wiederholt. Das Mischungsverhältnis der beiden Komponenten I und II betrug I:II = 70:30.

**Beispiel 4**

Beispiel 1 wurde wiederholt.

Komponente I bestand aus einem Polymerblend aus einem Ethylen-Propylen-Butylen-1-Terpolymeren und einem Propylen-Butylen-1-Copolymeren entsprechend einem Gehalt von 0,7 Gew.-% Ethylen, 81,3 Gew.-% Propylen und 18 Gew.-% Butylen, bezogen auf das Polymerblend.

Komponente II bestand aus einem Blend zweier Komponenten A und B im Verhältnis A:B = 50:50. Die Komponente A bestand aus einem HDPE mit einem MFI (50 N/190 °C) von 11 g/10 min (gemessen nach DIN 53 735), einer Viskositätszahl von 160 cm$^3$/g (gemessen nach DIN 53 728, Teil 4), einer Dichte von 0,954 g/cm$^3$ (gemessen nach DIN 53 479, Verfahren A), einem Kristallisationsgrad von 68 % und einem Schmelzpunkt von 132 °C nach DSC-Messung. Die Komponente B bestand aus einem statistischen Ethylen-Propylen-Copolymeren mit einem Ethylengehalt von 5 Gew.-%, bezogen auf das Gewicht des Copolymeren. Der Schmelzpunkt des Copolymeren lag bei 134 °C, wobei der Schmelzflußindex 7,0 g/10 min betrug.

Das Mischungsverhältnis der beiden Komponenten I und II betrug I:II = 60:40.

**Beispiel 5**

Beispiel 4 wurde wiederholt. Komponente I bestand aus einem statistischen Ethylen-Propylen-Copolymeren mit einem Ethylengehalt von 5 Gew.-%, bezogen auf das Gewicht des Copolymeren. Der Schmelzpunkt des Copolymeren lag bei 134 °C, wobei der Schmelzflußindex 7,0 g/10 min betrug.

Das Mischungsverhältnis der beiden Komponenten I und II betrug I:II = 50:50.

**Beispiel 6**

Beispiel 5 wurde wiederholt. Das Mischungsverhältnis der beiden Komponenten I und II betrug I:II = 70:30.

**Beispiel 7**

Beispiel 5 wurde wiederholt. Komponente II bestand aus einem Blend zweier Komponenten A und B im Verhältnis A:B = 50:50. Die Komponente A bestand aus einem HDPE mit einem MFI (50 N/190 °C) von 11 g/10 min (gemessen nach DIN 53 735), einer Viskositätszahl von 160 cm$^3$/g (gemessen nach DIN 53 728, Teil 4), einer Dichte von 0,954 g/cm$^3$ (gemessen nach DIN 53 479, Verfahren A), einem Kristallisationsgrad von 68 % und einem Schmelzpunkt von 132 °C nach DSC-Messung. Die Komponente B bestand aus einem Terpolymeren aus Ethylen-, Propylen- und Butylen-1-Einheiten mit einem Ethylengehalt von 1,9 Gew.-% und einem Butylen-1-Gehalt von 8,4 Gew.-%, bezogen auf das Terpolymer.

**Beispiel 8**

Beispiel 7 wurde wiederholt. Das Mischungsverhältnis der beiden Komponenten I und II betrug I:II = 70:30.

**Beispiel 9**

Beispiel 5 wurde wiederholt. Komponente II bestand aus einem Blend zweier Komponenten A und B im Verhältnis A:B = 50:50. Die Komponente A bestand aus einem HDPE mit einem MFI (50 N/190 °C) von 11 g/10 min (gemessen nach DIN 53 735), einer Viskositätszahl von 160 cm$^3$/g (gemessen nach DIN 53 728, Teil 4), einer Dichte von 0,954 g/cm$^3$ (gemessen nach DIN 53 479, Verfahren A), einem Kristallisationsgrad von 68 % und einem Schmelzpunkt von 132 °C nach DSC-Messung. Die Komponente B bestand aus einem Polymerblend aus einem Ethylen-Propylen-Butylen-1-Terpolymeren und einem Propylen-Butylen-1-Copolymeren entsprechend einem Gehalt von 0,7 Gew.-% Ethylen, 81,3 Gew.-% Propylen und 18 Gew.-% Butylen, bezogen auf das Polymerblend.

**Beispiel 10**

Beispiel 9 wurde wiederholt. Komponente I bestand aus einem Terpolymeren aus Ethylen-, Propylen- und Butylen-1-Einheiten mit einem Ethylengehalt von 1,9 Gew.-% und einem Butylen-1-Gehalt von 8,4 Gew.-%, bezogen auf das Terpolymer.

**Beispiel 11**

Beispiel 7 wurde wiederholt. Komponente I bestand aus einem Terpolymeren aus Ethylen-, Propylen- und Butylen-1-Einheiten mit einem Ethylengehalt von 1,9 Gew.-% und einem Butylen-1-Gehalt von 8,4 Gew.-%, bezogen auf das Terpolymer.

**Beispiel 12**

Beispiel 1 wurde wiederholt. Die Komponente II bestand aus dem reinen HDPE mit einem MFI (50 N/190 °C) von 11 g/10 min (gemessen nach DIN 53 735), einer Viskositätszahl von 160 cm$^3$/g (gemessen nach DIN 53 728, Teil 4), einer Dichte von 0,954 g/cm$^3$ (gemessen nach DIN 53 479, Verfahren A), einem Kristallisationsgrad von 68 % und einem Schmelzpunkt von 132 °C nach DSC-Messung.

**Beispiel 13**

Beispiel 2 wurde wiederholt. Die Komponente II entsprach der des Beispiels 12.

**Beispiel 14**

Beispiel 3 wurde wiederholt. Die Komponente II entsprach der des Beispiels 12.

**Beispiel 15**

Beispiel 11 wurde wiederholt. Die Komponente II entsprach der des Beispiels 12.

**Beispiel 16**

Beispiel 15 wurde wiederholt. Das Mischungsverhältnis der beiden Komponenten I und II betrug I:II = 70:30.
Zur Charakterisierung der Rohstoffe und der Folien wurden die folgenden Meßmethoden benutzt:

Schmelzflußindex

Der Schmelzflußindex wurde in Anlehnung an DIN 53 735 bei 21,6 N Belastung und 230 °C bzw. bei 50 N Belastung und 190 °C gemessen.

Schmelzpunkt

DSC-Messung, Maximum der Schmelzkurve, Aufheizgeschwindigkeit 20 °C/min.

Viskositätszahl J

Die Viskositätszahl ist ein Maß für die Molmasse. Die Viskositätszahl wird nach DIN 53 728, Teil 4, in 0,1%iger Dekahydronaphthalin-Lösung bei 135 °C gemessen.

Dichte $\rho$

Die Dichte wird nach DIN 53 479, Verfahren A, bestimmt.

Kristallisationsgrad $\alpha$

Der Kristallisationsgrad läßt sich durch folgende Beziehung ermitteln:

$$\alpha = \frac{\rho - \rho_{amorph}}{\rho_{kristallin} - \rho_{amorph}} \cdot 100\ \%$$

mit

$\rho_{amorph}$ = 0,8549 g/cm$^3$

$\rho_{kristallin}$ = 1,0005 g/cm$^3$

$\rho$ = Dichte des eingesetzten HDPE-Typs

Trübung

Die Trübung der Folie wurde in Anlehnung an ASTM-D 1003-52 gemessen.

Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 60° oder 85° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

Rauhigkeit

Die Rauhigkeit wurde in Anlehnung an DIN 4768 bestimmt.

Reibung

Die Reibung wurde in Anlehnung an DIN 53 375 bestimmt.

Oberflächenspannung

Die Oberflächenspannung wurde mittels der sogenannten Tintenmethode (DIN 53 364) bestimmt.

Bedruckbarkeit

Die coronabehandelten Folien wurden 14 Tage nach ihrer Produktion (Kurzzeitbeurteilung) bzw. 6 Monate nach ihrer Produktion (Langzeitbeurteilung) bedruckt.

Die Farbhaftung wurde mittels Klebebandtest beurteilt. Konnte mittels Klebeband wenig Farbe abgelöst werden, so wurde die Farbhaftung mit mäßig und bei deutlicher Farbablösung mit schlecht beurteilt.

Bestimmung der bleibenden Dehnung

Aus der Folie wurde ein 15 mm breiter Folienstreifen quer zur Maschinenrichtung geschnitten und in eine Zugprüfmaschine eingespannt, wobei die Einspannlänge 200 mm betrug. Die Probe wurde dann mit 20 mm/min entsprechend 10 %/min gedehnt. Nach einer Dehnung von 10 %, d. h. bei einer Probenlänge von 220 mm, wurde die Probe automatisch mit gleicher Geschwindigkeit entspannt.

Die bleibende Dehnung berechnet sich dabei gemäß

$$D_b = \frac{X\,\%}{10\,\%} \cdot 100\,\%$$

Kratzfestigkeit bzw. Kratzempfindlichkeit:

Die Kratzfestigkeit wird in Anlehnung an DIN 53 754 bestimmt.

Für die Bestimmung der Kratzfestigkeit wird das Abriebmeßgerät Taber Modell 503 Abraser der Firma Teledyne Taber benutzt, wobei Reibräder der Marke Calibrade R H18, die mit 250 g belastet werden, eingesetzt werden. Unter Kratzfestigkeit bzw. Kratzempfindlichkeit versteht man die Trübungszunahme der verkratzten Folie im Vergleich zur Originalfolie nach 50 Umdrehungen des Probentellers. Die Kratzfestigkeit wird mit sehr gut (+ +) bezeichnet, wenn die Trübungszunahme kleiner 22 % beträgt, mit gut (+), wenn die Trübungszunahme bei 22 bis 25 % liegt, mit mäßig (±), wenn die Trübungszunahme bei 25 bis 30 % liegt, und mit schlecht (-) bei Trübungszunahmen von größer 30 %.

In der nachstehenden Tabelle 2 sind die Eigenschaften der Polypropylenfolien der Beispiele zusammengefaßt.

## Tabelle 2

| Bei- spiel | Glanz (ASTM D-523-78) Meßwinkel 85° | Trübung (ASTM 1003) % | Rauhigkeit (c.o. 0,25 mm) μm | Reibungs- koeffizient - | Oberflächenspannung nach 6 Monaten Lagerung mN/m | visuelle Beurteilung des - matten Erscheinungsbildes (+ + = sehr gut) | bleibende Dehnung % längs | quer | Kratzfestig- keit Δ Trübung |
|---|---|---|---|---|---|---|---|---|---|
| B1 | 40 | 60 | 2,5 | 0,5 | 38 | + + | 63 | 62 | 22 |
| B2 | 32 | 66 | 3,0 | 0,4 | 39 | + + | 63 | 61 | 20 |
| B3 | 42 | 58 | 2,3 | 0,5 | 38 | + + | 64 | 61 | 20 |
| B4 | 38 | 62 | 2,6 | 0,4 | 39 | + + | 63 | 62 | 20 |
| B5 | 30 | 68 | 3,2 | 0,3 | 39 | + + | 62 | 60 | 20 |
| B6 | 38 | 63 | 2,6 | 0,4 | 39 | + + | 63 | 62 | 20 |
| B7 | 32 | 65 | 2,9 | 0,4 | 39 | + + | 63 | 63 | 20 |
| B8 | 38 | 62 | 2,7 | 0,4 | 39 | + + | 62 | 62 | 20 |

## Tabelle 2 (Fortsetzung)

| Bei-spiel | Glanz (ASTM D-523-78) Meßwinkel 85° | Trübung (ASTM 1003) % | Rauhigkeit (c.o. 0,25 mm) μm | Reibungs-koeffizient - | Oberflächenspannung nach 6 Monaten Lagerung mN/m | visuelle Beurteilung des - matten Erscheinungsbildes (+ + = sehr gut) | bleibende Dehnung % längs | quer | Kratzfestig-keit Δ Trübung |
|---|---|---|---|---|---|---|---|---|---|
| B9 | 34 | 63 | 3,3 | 0,4 | 39 | + + | 64 | 62 | 20 |
| B10 | 36 | 62 | 2,6 | 0,4 | 39 | + + | 63 | 61 | 20 |
| B11 | 35 | 62 | 2,6 | 0,4 | 39 | + + | 64 | 60 | 20 |
| B12 | 31 | 68 | 3,0 | 0,4 | 38 | + + | 65 | 60 | 20 |
| B13 | 29 | 70 | 3,2 | 0,3 | 39 | + + | 64 | 61 | 20 |
| B14 | 32 | 66 | 2,8 | 0,3 | 39 | + + | 62 | 60 | 20 |
| B15 | 30 | 68 | 3,0 | 0,3 | 39 | + + | 63 | 61 | 20 |
| B16 | 34 | 64 | 2,8 | 0,4 | 39 | + + | 64 | 60 | 20 |

**Patentansprüche**

1. Polypropylen-Mehrschichtfolie, welche mindestens eine Basisschicht, enthaltend Polypropylen, oder eine Polypropylenmischung, und niedermolekulares Harz, und mindestens eine Deckschicht umfaßt, welche eine Mischung bzw. ein Blend zweier Komponenten I und II enthält, dadurch gekennzeichnet, daß

das Verhältnis (Gewichtsverhältnis) der beiden Komponenten I und II zwischen I:II = 10-90 und I:II = 90-10 liegt und
die Komponente I im wesentlichen

ein Propylenhomopolymeres oder
ein Copolymeres von

Ethylen und Propylen oder
Ethylen und Butylen oder
Propylen und Butylen oder
Ethylen und einem anderen -Olefin mit 5 bis 10 Kohlenstoffatomen oder
Propylen und einem anderen -Olefin mit 5 bis 10 Kohlenstoffatomen oder

ein Terpolymeres von

Ethylen und Propylen und Butylen oder
Ethylen und Propylen und einem anderen -Olefin mit 5 bis 10 Kohlenstoffatomen oder

eine Mischung aus zwei oder mehreren der genannten Homo-, Co- und Terpolymeren oder
ein Blend aus zwei oder mehreren der genannten Homo-, Co- und Terpolymeren, gegebenenfalls gemischt mit einem oder mehreren der genannten Homo-, Co- und Terpolymeren,

enthält und
die Komponente II im wesentlichen ein HDPE mit einem Schmelzflußindex MFI, gemessen nach DIN 53 735 von 1,5 bis 45 g/10min oder ein Blend zweier Blendkomponenten A und B enthält, wobei
das Verhältnis (Gewichtsverhältnis) der beiden Blendkomponenten A und B zwischen A:B = 20-80 und A:B = 80-20 liegt und
die Blendkomponente A im wesentlichen

ein HDPE mit einem Schmelzflußindex MFI, gemessen nach DIN 53 735 von 1,5 bis 45 g/10min ist und

die Blendkomponente B im wesentlichen

ein Propylenhomopolymeres oder
ein Copolymeres von

Ethylen und Propylen oder
Ethylen und Butylen oder
Propylen und Butylen oder
Ethylen und einem anderen -Olefin mit 5 bis 10 Kohlenstoffatomen oder
Propylen und einem anderen -Olefin mit 5 bis 10 Kohlenstoffatomen oder

ein Terpolymeres von

Ethylen und Propylen und Butylen oder
Ethylen und Propylen und einem anderen -Olefin mit 5 bis 10 Kohlenstoffatomen oder

eine Mischung aus zwei oder mehreren der genannten Homo-, Co- und Terpolymeren oder
ein Blend aus zwei oder mehreren der genannten Homo-, Co- und Terpolymeren

ist und
die Folie eine Trübung gemessen nach ASTM-D 1003 im Bereich von 10 bis 80 hat und die Folie matt ist.

2.   Polypropylen-Mehrschichtfolie gemäß Anspruch 1, dadurch gekennzeichnet, daß

die Komponente I im wesentlichen

ein Propylenhomopolymeres ist oder
ein Copolymeres von

Ethylen und Propylen oder
Ethylen und Butylen-1 oder
Propylen und Butylen-1 oder

ein Terpolymeres von

Ethylen und Propylen und Butylen-1 oder

eine Mischung aus zwei oder mehreren der genannten besonders bevorzugten Homo-, Co- Terpolymeren oder
ein Blend aus zwei oder mehreren der genannten besonders bevorzugten Homo-, Co- und Terpolymeren, gegebenenfalls gemischt mit einem oder mehreren der genannten Homo-, Co- und Terpolymeren,
wobei insbesondere Propylenhomopolymer oder

statistische Ethylen-Propylen-Copolymere mit

einem Ethylengehalt von 2 bis 10 Gew.-%, bevorzugt 5 bis 8 Gew.-%, oder

statistische Propylen-Butylen-1-Copolymere mit

einem Butylengehalt von 4 bis 25 Gew.-%, bevorzugt 10 bis 20 Gew.-%,

jeweils bezogen auf das Gesamtgewicht des Copolymeren, oder
statistische Ethylen-Propylen-Butylen-1-Terpolymere mit

einem Ethylengehalt von 1 bis 10 Gew.-%, bevorzugt 2 bis 6 Gew.-%, und
einem Butylen-1-Gehalt von 3 bis 20 Gew.-%, bevorzugt 8 bis 10 Gew.-%,
jeweils bezogen auf das Gesamtgewicht des Terpolymeren, oder

ein Blend aus einem Ethylen-Propylen-Butylen-1-Terpolymeren und einem Propylen-Butylen-1-Copolymeren

mit einem Ethylengehalt von 0,1 bis 7 Gew.-%
und einem Propylengehalt von 50 bis 90 Gew.-%
und einem Butylen-1-Gehalt von 10 bis 40 Gew.-%,
jeweils bezogen auf das Gesamtgewicht des Polymerblends,

bevorzugt sind, und

die Blendkomponente B im wesentlichen

ein Propylenhomopolymeres ist oder
ein Copolymeres von

Ethylen und Propylen oder
Ethylen und Butylen-1 oder
Propylen und Butylen-1 oder

ein Terpolymeres von

Ethylen und Propylen und Butylen-1 oder

eine Mischung aus zwei oder mehreren der genannten besonders bevorzugten Homo-, Co- und Terpolymeren oder

ein Blend aus zwei oder mehreren` der genannten besonders bevorzugten Homo-, Co- und Terpolymeren, wobei insbesondere Propylenhomopolymer oder

statistische Ethylen-Propylen-Copolymere mit

einem Ethylengehalt von 2 bis 10 Gew.-%, bevorzugt 5 bis 8 Gew.-%, oder

statistische Propylen-Butylen-1-Copolymere mit

einem Butylengehalt von 4 bis 25 Gew.-%, bevorzugt 10 bis 20 Gew.-%,

jeweils bezogen auf das Gesamtgewicht des Copolymeren, oder
statistische Ethylen-Propylen-Butylen-1-Terpolymere mit

einem Ethylengehalt von 1 bis 10 Gew.-%, bevorzugt 2 bis 6 Gew.-%, und
einem Butylen-1-Gehalt von 3 bis 20 Gew.-%, bevorzugt 8 bis 10 Gew.-%,
jeweils bezogen auf das Gesamtgewicht des Terpolymeren, oder

ein Blend aus einem Ethylen-Propylen-Butylen-1-Terpolymeren und einem Propylen-Butylen-1-Copolymeren

mit einem Ethylengehalt von 0,1 bis 7 Gew.-%
und einem Propylengehalt von 50 bis 90 Gew.-%
und einem Butylen-1-Gehalt von 10 bis 40 Gew.-%,
jeweils bezogen auf das Gesamtgewicht des Polymerblends,

bevorzugt sind.

3. Polypropylen-Mehrschichtfolie gemäß Anspruch 1 und/oder 2, dadurch gekennzeichnet, daß das HDPE eine Viskositätszahl von 100 bis 450 cm$^3$/g (gemessen nach DIN 53 728, Teil 4), eine Dichte von 0,93 bis 0,97 g/cm$^3$ (gemessen nach DIN 53 479, Verfahren A), einen Kristallisationsgrad von 35 bis 80 % und einen Schmelzpunkt von 120 bis 150 C nach DSC-Messung aufweist.

4. Polypropylen-Mehrschichtfolie gemäß einem oder mehreren der Ansprüche 1 bis 3, dadurch gekennzeichnet, daß das Verhältnis der Blendkomponenten A und B im Bereich von A:B = 40:60 und A:B = 60:40, liegt.

5. Polypropylen-Mehrschichtfolie gemäß einem oder mehreren der Ansprüche 1 bis 4, dadurch gekennzeichnet, daß das Blend aus den Komponenten A und B einen Schmelzflußindex von 1,5 bis 12 g/10 min, vorzugweise 2,5 bis 6 g/10 min, (230 C, 21,6 N Belastung) hat.

6. Polypropylen-Mehrschichtfolie gemäß einem oder mehreren der Ansprüche 1 bis 5, dadurch gekennzeichnet, daß das Polypropylenpolymere der Basisschicht einen Schmelzpunkt von mindestens 140 C besitzt und der Schmelzflußindex im Bereich von 0,5 bis 15 g/10 min liegt.

7. Polypropylen-Mehrschichtfolie gemäß einem oder mehreren der Ansprüche 1 bis 6, dadurch gekennzeichnet, daß das Harz einen Erweichungspunkt von 80 bis 180 C, vorzugsweise 120 bis 160 C, hat.

8. Polypropylen-Mehrschichtfolie gemäß einem oder mehreren der Ansprüche 1 bis 7, dadurch gekennzeichnet, daß das Harz der Basisschicht in einer Menge von 5 bis 40 Gew.-%, vorzugsweise 10 bis 35 Gew.-%, jeweils bezogen auf das Gewicht der Basisschicht, zugesetzt ist.

9. Polypropylen-Mehrschichtfolie gemäß einem oder mehreren der Ansprüche 1 bis 8, dadurch gekennzeichnet, daß die Mehrschichtfolie in Längs- und Querrichtung einen bleibenden Dehnwert von über 50 %, vorzugsweise im Bereich von 50 bis 70 %, hat.

10. Polypropylen-Mehrschichtfolie gemäß einem oder mehreren der Ansprüche 1 bis 9, dadurch gekennzeichnet, daß die Mehrschichtfolie in etwa isotrope mechanische Eigenschaften hat.

**11.** Verfahren zur Herstellung der Polypropylen-Mehrschichtfolie gemäß Anspruch 1, bei dem die den einzelnen Schichten der Folie entsprechenden Schmelzen durch eine Flachdüse coextrudiert werden, die coextrudierte Folie über eine Abzugswalze, deren Temperatur zwischen 40 und 100 C liegt, abgezogen wird, die Folie biaxial gestreckt wird mit einem Längsstreckverhältnis von 5,5:1 bis 9:1 und einem Querstreckverhältnis von 6:1 bis 8:1, die biaxial gestreckte Folie thermofixiert, gegebenenfalls coronabehandelt und anschließend aufgewickelt wird, dadurch gekennzeichnet, daß die Folie mindestens eine matte Oberfläche aufweist.

**12.** Verfahren gemäß Anspruch 11, dadurch gekennzeichnet, daß die Längsstreckung der Folie bei 120 bis 150 C und die Querstreckung bei 155 bis 190 C durchgeführt wird.

**13.** Verfahren gemäß Anspruch 11 und/oder 12, dadurch gekennzeichnet, daß die Folie in etwa balanced orientiert ist.

**14.** Verwendung der Polypropylen-Mehrschichtfolie gemäß einem oder mehreren der Ansprüche 1 bis 10 für den Dreheinschlag.

## Claims

**1.** Multi-layer polypropylene film comprising at least one base layer containing polypropylene or a polypropylene mixture and low-molecular resin and at least one top layer which contains a mixture or a blend of two components I and II, characterised in that

the ratio (weight ratio) of the two components I and II is between I:II = 10-90 and I:II = 90-10 and in that component I contains substantially

a polypropylene homopolymer or
a copolymer of

ethylene and propylene or
ethylene and butylene or
propylene and butylene or
ethylene and another olefin with 5 to 10 carbon atoms or
propylene and another olefin with 5 to 10 carbon atoms or

a terpolymer of

ethylene and propylene and butylene or
ethylene and propylene and another olefin with 5 to 10 carbon atoms or

a mixture of two or more of the said homo-, co- and terpolymers or
a blend consisting of two or more of the said homo-, co- and terpolymers, possibly mixed with one or a plurality of the said homo-, co- and terpolymers, and

component II contains substantially one HDPE with a melt flow index MFI of 1.5 to 45 g/10min measured according to DIN 53 735 or a blend of two blend components A and B, in which
the ratio (ratio by weight) of the two blend components A and B is between A:B = 20-80 and A:B = 80-20 and the blend component A is substantially

an HDPE with a melt flow index MFI of 1.5 to 45 g/10 min measured according DIN 53 735

and the blend component B is substantially

one propylene homopolymer or
one copolymer of

ethylene and propylene or
ethylene and butylene or
propylene and butylene or
ethylene and another olefin with 5 to 10 carbon atoms or

propylene and another olefin with 5 to 10 carbon atoms or

a terpolymer of

ethylene and propylene and butylene or
ethylene and propylene and another olefin with 5 to 10 carbon atoms or

a mixture of two or more of the said homo-, co- and terpolymers or
a blend of two or more of the said homo-, co- and terpolymers

and in that the film has an opacity rating in the range from 10 to 80, measured according to ASTM-D 1003, and in that the film is matt.

2. A multi-layer polypropylene film according to claim 1, characterised in that

component I is substantially

a propylene homopolymer or
a copolymer of

ethylene and propylene or
ethylene and butylene-1 or
propylene and butylene-1 or

a terpolymer of

ethylene and propylene and butylene-1 or

a mixture of two or more of the said particularly preferred homo-, co- or terpolymers or
a blend of two or more of the said particularly preferred homo-, co- and terpolymers, possibly mixed with one or more of the said homo-, co- and terpolymers,
whereby in particular propylene homopolymer or

statistical ethylene propylene copolymers with

an ethylene content of 2 to 10% by weight and preferably 5 to 8% by weight or

statistical propylene butylene-1 copolymers with

a butylene content of 4 to 25% by weight and preferably 10 to 20% by weight,

respectively related to the total weight of copolymer, or
statistical ethylene propylene butylene-1 terpolymers with

an ethylene content of 1 to 10% by weight and preferably 2 to 6% by weight and
a butylene-1 content of 3 to 20% by weight and preferably 8 to 19% by weight,
respectively related to the total weight of terpolymer, or

a blend of an ethylene propylene butylene-1 terpolymer and a propylene butylene-1 copolymer

with an ethylene content of 0.1 to 7% by weight
and a propylene content of 50 to 90% by weight
and a butylene-1 content of 10 to 40% by weight
respectively related to the total weight of the polymer blend, are preferred, and

in that the blend component B is substantially

a propylene homopolymer or

a copolymer of

> ethylene and propylene or
> ethylene and butylene-1 or
> propylene and butylene-1 or

a terpolymer of

> ethylene and propylene and butylene-1 or

a mixture of two or more of the said particularly preferred homo-, co- and terpolymers or
a blend of two or more of the said particularly preferred homo-, co- and terpolymers
whereby in particular propylene homopolymer or

> statistical ethylene propylene copolymers with

>> an ethylene content of 2 to 10% by weight and preferably 5 to 8% by weight or

> statistical propylene butylene-1 copolymers with

>> a butylene content of 4 to 25% by weight and preferably 10 to 20% by weight

respectively referred to the total weight of the copolymer, or
statistical ethylene propylene butylene-1 terpolymer with

>> an ethylene content of 1 to 10% by weight and preferably 2 to 6% by weight and
>> a butylene-1 content of 3 to 20% by weight, preferably 8 to 10% by weight
>> respectively referred to the total weight of the terpolymer or

> a blend of an ethylene propylene butylene-1 terpolymer and a propylene butylene-1 copolymer

>> with an ethylene content of 0.1 to 7% by weight
>> and a propylene content of 50 to 90% by weight
>> and a butylene-1 content of 10 to 40% by weight
>> respectively referred to the total weight of the polymer blend are preferred.

3. A multi-layer polypropylene film according to claim 1 and/or 2, characterised in that the HDPE has a viscosity index of 100 to 450 cu.cm/g (measured according to DIN 53 728, Part 4), a density of 0.93 to 0.97 g/cu.cm (measured according to DIN 53 479, Process A), a crystallisation degree of 35 to 80% and a melting point of 120 to 150°C, according to DSC measurement.

4. A multi-layer polypropylene film according to one or more of claims 1 to 3, characterised in that the ratio of the blend components A and B is in the range from A:B = 40:60 and A:B = 60:40.

5. A multi-layer polypropylene film according to one or more of claims 1 to 4, characterised in that the blend of the components A and B has a melt flow index of 1.5 to 12 g/10 min and preferably 2.5 to 6 g/10 min (230°C, 21.6 N loading).

6. A multi-layer polypropylene film according to one or more of claims 1 to 5, characterised in that the polypropylene polymer of the base layer has a melting point of at least 140°C while the melt flow index is in the range from 0.5 to 15 g/10 min.

7. A multi-layer polypropylene film according to one or more of claims 1 to 6, characterised in that the resin has a softening point of 80 to 180°C and preferably 120 to 160°C.

8. A multi-layer polypropylene film according to one or more of claims 1 to 7, characterised in that the resin is added to the base layer in a quantity of 5 to 40% by weight and preferably 10 to 35% by weight, respectively referred to the weight of the base layer.

9. A multi-layer polypropylene film according to one or more of claims 1 to 8, characterised in that the multi-layer film has in the longitudinal and transverse directions a permanent stretch value of over 50% and preferably in the range from 50 to 70%.

10. A multi-layer polypropylene film according to one or more of claims 1 to 9, characterised in that the multi-layer film has substantially isotropic mechanical properties.

11. A method of producing the multi-layer polypropylene film according to claim 1, in which the melts corresponding to the individual layers of the film are coextruded through a flat film die, the coextruded film is drawn off over a pull-off roll the temperature of which is between 40 and 100 C, the film is biaxially stretched with a longitudinal stretching ratio of 5.5:1 to 9:1 and a transverse stretching ratio of 6:1 to 8:1, the biaxially stretched film is heat-set, possibly corona treated and then rolled up, characterised in that the film has at least one mail surface.

12. A method according to claim 11, characterised in that the longitudinal stretching of the film is carried out at 120 to 150°C and the transverse stretching at 155 to 190°C.

13. A method according to claim 11 and/or 12, characterised in that the film is substantially balanced in its orientation.

14. Use of the multi-layer polypropylene film according to one or more of claims 1 to 10 for twist wrapping.

## Revendications

1. Feuille multicouche en polypropylène qui comprend au moins une couche de base contenant du polypropylène ou un mélange à base de polypropylène, et une résine à bas poids moléculaire, et au moins une couche de recouvrement qui contient un mélange, respectivement un mélange homogène de deux composants I et II, caractérisée en ce que le rapport (rapport pondéral) des deux composants I et II se situe entre I:II = 10-90 et I:II = 90-10, et

   le composant I contient essentiellement

    un homopolymère de propylène ou
    un copolymère

     d'éthylène et de propylène ou
     d'éthylène et de butylène ou
     de propylène et de butylène ou
     d'éthylène et d'une autre -oléfine contenant de 5 à 10 atomes de carbone ou
     de propylène et d'une autre -oléfine contenant de 5 à 10 atomes de carbone ou

    un terpolymère

     d'éthylène et de propylène et de butylène ou
     d'éthylène et de propylène et d'une autre -oléfine contenant de 5 à 10 atomes de carbone ou

    un mélange de deux des homopolymères, des copolymères et des terpolymères mentionnés ou plus, ou un mélange homogène de deux des homopolymères, des copolymères et des terpolymères mentionnés ou plus le cas échéant en mélange avec un ou plusieurs des homopolymères, des copolymères et des terpolymères mentionnés,

   et le composant II contient essentiellement un HDPE possédant un indice de fluidité à chaud (MFI) mesuré conformément à la norme DIN 53735, de 1,5 à 45 g/10 min, ou encore un mélange homogène des deux composants A et B du mélange homogène,
   dans laquelle le rapport (rapport pondéral) des deux composants A et B du mélange homogène se situe entre A:B = 20-80 et A:B = 80-20, et

   le composant A du mélange homogène représente essentiellement

    un HDPE possédant un indice de fluidité à chaud (MFI) mesuré conformément à la norme DIN 53735 de 1,5 à 45 g/10 min, et

le composant B du mélange homogène représente essentiellement

un homopolymère de propylène ou
un copolymère

d'éthylène et de propylène ou
d'éthylène et de butylène ou
de propylène et de butylène ou
d'éthylène et d'une autre -oléfine contenant de 5 à 10 atomes de carbone ou
de propylène et d'une autre -oléfine contenant de 5 à 10 atomes de carbone ou

un terpolymère

d'éthylène et de propylène et de butylène ou
d'éthylène et de propylène et d'une autre -oléfine contenant de 5 à 10 atomes de carbone ou

un mélange de deux des homopolymères, des copolymères et des terpolymères mentionnés ou plus, ou
un mélange homogène de deux des homopolymères, des copolymères et des terpolymères mentionnés
ou plus, et

la feuille possède un voile mesuré conformément à la norme ASTM-D 1003 dans le domaine de 10 à 80 et la
feuille est mate.

2. Feuille multicouche en polypropylène selon la revendication 1, caractérisée en ce que

le composant I représente essentiellement

un homopolymère de propylène ou
un copolymère

d'éthylène et de propylène ou
d'éthylène et de butylène-1 ou
de propylène et de butylène-1 ou

un terpolymère

d'éthylène et de propylène et de butylène-1 ou

un mélange de deux des homopolymères, des copolymères et des terpolymères mentionnés ci-dessus
comme étant particulièrement préférés ou plus, le cas échéant en mélange avec un ou plusieurs des
homopolymères, des copolymères et des terpolymères mentionnés,
dans lequel sont préférés en particulier, un homopolymère de propylène ou

des copolymères statistiques d'éthylène-propylène

possédant une teneur en éthylène de 2 à 10% en poids, de préférence de 5 à 8% en poids, ou

des copolymères statistiques de propylène-butylène-1

possédant une teneur en butylène de 4 à 25% en poids, de préférence de 10 à 20% en poids,

chaque fois rapportés au poids total du copolymère, ou encore
des terpolymères statistiques d'éthylène-propylène-butylène-1

possédant une teneur en éthylène de 1 à 10% en poids, de préférence de 2 à 6% en poids et
une teneur en butylène-1 de 3 à 20% en poids, de préférence de 8 à 10% en poids,
chaque fois rapportés au poids total du terpolymère,
ou

un mélange homogène d'un terpolymère d'éthylène-propylène-butylène-1 et d'un copolymère de propylène-butylène-1

possédant une teneur en éthylène de 0,1 à 7% en poids,
et une teneur en propylène de 50 à 90% en poids,
et une teneur en butylène-1 de 10 à 40% en poids,
chaque fois rapportés au poids total du mélange homogène de polymères, et

le composant B du mélange homogène représente essentiellement

un copolymère de propylène ou
un copolymère

d'éthylène et de propylène ou
d'éthylène et de butylène-1 ou
de propylène et de butylène-1 ou

un terpolymère

d'éthylène et de propylène et de butylène-1 ou

un mélange de deux des homopolymères, des copolymères et des terpolymères mentionnés comme étant particulièrement préférés ou plus, ou encore
un mélange homogène de deux des homopolymères, des copolymères et des terpolymères mentionnés comme étant particulièrement préférés ou plus,
dans lequel sont préférés en particulier, un homopolymère de propylène ou

des copolymères statistiques d'éthylène-propylène

possédant une teneur en éthylène de 2 à 10% en poids, de préférence de 5 à 8% en poids, ou

des copolymères statistiques de propylène-butylène-1

possédant une teneur en butylène de 4 à 25% en poids, de préférence de 10 à 20% en poids,

chaque fois rapportés au poids total du copolymère, ou
des terpolymères statistiques d'éthylène-propylène-butylène-1

possédant une teneur en éthylène de 1 à 10% en poids, de préférence de 2 à 6% en poids et
une teneur en butylène-1 de 3 à 20% en poids, de préférence de 8 à 10% en poids,
chaque fois rapportés au poids total du terpolymère,
ou

un mélange homogène d'un terpolymère d'éthylène-propylène-butylène-1 et d'un copolymère de propylène-butylène-1

possédant une teneur en éthylène de 0,1 à 7% en poids,
et une teneur en propylène de 50 à 90% en poids,
et une teneur en butylène-1 de 10 à 40% en poids,
chaque fois rapportés au poids total du mélange homogène de polymères.

3. Feuille multicouche en polypropylène selon les revendications 1 et/ou 2, caractérisée en ce que le HDPE possède un indice de viscosité de 100 à 450 $cm^3$/g (mesuré conformément à la norme DIN 53728, partie 4), une densité de 0,93 à 0,97 g/$cm^3$ (mesurée conformément à la norme DIN 53479, procédé A), un degré de cristallisation de 35 à 80% et un point de fusion de 120 à 150°C conformément à une mesure par calorimétrie par analyse différentielle.

4. Feuille multicouche en polypropylène selon une ou plusieurs des revendications 1 à 3, caractérisée en ce que le rapport des composants A et B du mélange homogène se situe dans le domaine de A:B = 40:60 et A:B = 60:40.

**5.** Feuille multicouche en polypropylène selon une ou plusieurs des revendications 1 à 4, caractérisée en ce que le mélange homogène des composants A et B possède un indice de fluidité à chaud de 1,5 à 12 g/10 min, de préférence de 2,5 à 6 g/10 min (température de 230°C sous une charge de 21,6 N).

**6.** Feuille multicouche en polypropylène selon une ou plusieurs des revendications 1 à 5, caractérisée en ce que le polymère de polypropylène de la couche de base possède un point de fusion d'au moins 140°C et un indice de fluidité à chaud qui se situe dans le domaine de 0,5 à 15 g/10 min.

**7.** Feuille multicouche en polypropylène selon une ou plusieurs des revendications 1 à 6, caractérisée en ce que la résine possède un point de ramollissement de 80 à 180°C, de préférence de 120 à 160°C.

**8.** Feuille multicouche en polypropylène selon une ou plusieurs des revendications 1 à 7, caractérisée en ce que la résine de la couche de base est ajoutée en une quantité de 5 à 40% en poids, de préférence de 10 à 35% en poids chaque fois rapportés au poids de la couche de base.

**9.** Feuille multicouche en polypropylène selon une ou plusieurs des revendications 1 à 8, caractérisée en ce que la feuille multicouche possède, en direction longitudinale et en direction transversale, une valeur d'allongement permanent supérieure à 50%, de préférence dans le domaine de 50 à 70%.

**10.** Feuille multicouche en polypropylène selon une ou plusieurs des revendications 1 à 9, caractérisée en ce que la feuille multicouche possède des propriétés mécaniques approximativement isotropes.

**11.** Procédé pour la fabrication de la feuille multicouche en polypropylène selon la revendication 1, dans lequel on soumet à une coextrusion, à travers une filière pour feuilles, les masses fondues correspondant aux couches individuelles de la feuille, on tend la feuille soumise à une coextrusion par-dessus un rouleau tendeur dont la température se situe entre 40 et 100°C, on soumet la feuille à un étirage biaxe et avec un rapport d'étirage en direction longitudinale de 5,5:1 à 9:1 et avec un rapport d'étirage en direction transversale de 6:1 à 8:1, on soumet la feuille qui a été soumise à un étirage biaxe à un thermofixage, on la soumet le cas échéant à un traitement par effluves négatives, puis on l'enroule, caractérisé en ce que la feuille présente au moins une surface mate.

**12.** Procédé selon la revendication 11, caractérisé en ce qu'on effectue l'étirage de la feuille en direction longitudinale à une température de 120 à 150°C et l'étirage en direction transversale à une température de 155 à 190°C.

**13.** Procédé selon les revendications 11 et/ou 12, caractérisé en ce que la feuille présente une orientation approximativement équilibrée.

**14.** Utilisation de la feuille multicouche en polypropylène selon une ou plusieurs des revendications 1 à 10 pour l'emballage rotatif.